# EUROPEAN PATENT APPLICATION

(11) **EP 3 835 726 A1**
(43) Date of publication of application: **16.06.2021**
(21) Application number: 19216031.5
(22) Date of filing: 13.12.2019
(51) Int. Cl.: G01C 23/00, G05D 1/06

(54) **LANDING AID SYSTEM AND LANDING AID METHOD**

(71) Applicant: HENSOLDT Sensors GmbH, 82024 Taufkirchen (DE)
(72) Inventor: Kramper, Patrick, 88090 Immenstaad (DE); Münsterer, Thomas, 88069 Tettnang (DE)
(74) Representative: LifeTech IP Spies & Behrndt Patentanwälte PartG mbB

(57) **Abstract**

A landing aid system (100) for a pilot of an aircraft (200) to land in a landing site (10) is disclosed. The system (100) comprises: at least one camera (120, 121, 122, ...) for capturing images of the landing site (10) along a flying path (20) from a side of the aircraft (200); an IMU and a processing unit (130). The IMU and the cameras may also be installed on the aircraft (200) and system only accesses the corresponding data. The processing unit (130) is adapted: to determine three-dimensional, 3D, information of the landing site (10) based on a series of images (41, 42) captured along the flying path (20) and the corresponding navigational data, and, based thereon, to determine and provide landing symbology (31, 32, ...) for displaying to the pilot of the aircraft (200) to aid the landing.

## Description

### Technical Field

Examples relate to concepts for supporting an aircraft pilot during a landing maneuver and applications thereof and in particular to a landing aid system for a pilot of an aircraft as well as a method for providing a landing aid to a pilot of an aircraft.

### Background

Landing under degraded visual environment (DVE) condition is a major threat for all kind of helicopters. Year by year numerous helicopters have accidents with significant damage or even injury or death of crew or passengers. There are various reasons for DVE conditions, for example night, fog, heavy rain, heavy snowfall, brownout, and whiteout. Due to the inevitable proximity to terrain and obstacles in the landing phase, this is the most critical flight phase. Brownout and whiteout are phenomena that occur during start and landing phase but are most critical in landing phase as the landing maneuver is more challenging and the visibility can dramatically decrease within a fraction of a second.

There is a demand to further improve the aid given to a pilot for landing at a landing site that provides reliable results and is based on simple means.

### Summary

At least some of the above-mentioned problems are solved by a landing aid system according to claim 1 and a corresponding method according to claim 10. The dependent claims refer to further advantageous realizations for the subject matters of the independent claims.

The present invention relates to a landing aid system for a pilot of an aircraft to land in a landing site. The aircraft includes at least one camera for capturing images of the landing site along a flying path from a side of the aircraft and an inertial measurement unit, IMU, adapted to provide data during flight indicative of movements of the aircraft. The system comprises a processing unit, which is adapted:
- to determine three-dimensional, 3D, information of the landing site based on a series of images captured along the flying path in combination with the data of the IMU both time-synchronized along the flying path, and based thereon
- to determine and provide landing symbology for displaying to the pilot of the aircraft to aid the landing.

The aircraft may be a helicopter, but the present invention shall not be limited on particular aircrafts. The flying path may start on a given starting position, which may or may not be specified. The starting position may be arbitrary. The cameras may include at least one side camera so that the aircraft can pass once or more times the landing site while capturing, e.g., continuously the images. The 3D information can be derived by analyzing these images that show the landscape from different, with the time varying, viewing angles and viewpoints under which, e.g., objects occur in the images. As a result, when knowing the camera position and orientation e.g. from a Navigational data provided by an IMU so-called "structure from motion" (SfM) techniques may be used to obtain the 3D information about the scenery at the landing site. Object recognition techniques may also be utilized to identify objects in the images of the camera(s).

For example, the displacement between two, or multiple, images taken at different times may be used to reconstruct the depth of the scene. This technique may fail when the scene for which a 3D structure is sought lies in the vanishing point, which is always the case for a direct approach to the landing site. To avoid this, the cameras are oriented to the side and the flight path may be designed to guide past the landing site. In aviation this technique is known as a fly-by maneuver, which is sometimes used for visual surveillance of the landing site.

The landing site may comprise a landing position, which coordinates are known (preset). The landing site may be provided from outside the landing aid system, for example by an assistance server. The landing symbology may indicate particular identified 3D objects that may include one or more of the following: a tree, a building, a hill, a bridge, a river, a lake or any other potential obstacle.

The at least one camera and/or the IMU may be part of the system, in which case the aircraft may not need to have further cameras and/or another IMU. Thus, according to another embodiment, the system further comprises the at least one camera and/or the inertial measurement unit, IMU, adapted to provide data during flight indicative of movements of the aircraft. Accordingly, the processing unit may further be adapted: (i) to record navigation data along the flying path based on the data of the IMU (e.g. starting from the starting position) and (ii) to determine the 3D information of the landing site using the images of the landing site in combination with the navigation data. A time-synchronization along the flying path may be performed (e.g. for the navigational data and the captured images). For example, the data may comprise currently measured movement of the aircraft during the fly-by maneuver of the aircraft along the flying path.

Optionally, the processing unit may evaluate the flying path of the aircraft based on the data of the IMU, wherein the flying path extends from a starting position to the landing site. For example, the starting position may be a point in the air indicating the starting point of the flying path. Or, the starting position may be any position in a vicinity or an environment of the landing site, such that the landing site can be in line of sight of at least one camera of the aircraft. The IMU or the processing unit may further improve results obtained by the exemplary SfM-techniques.

The processing unit may be a computer. The IMU may be adapted to compute the data to be provided to the processing unit based on sensor signals measuring information on a movement of the aircraft, such as velocity and/or acceleration(s). The sensor signals may comprise acceleration information and/or velocity information of the aircraft in all three directions and/or yaw moments and/or rotational rates. The sensors may include one or more gyroscopes or acceleration or angular rate sensors. The sensors may be part of the IMU or the IMU may be adapted to access external sensors to obtain the sensor signals.

To achieve this, according to yet another embodiment, the processing unit and/or the IMU are configured to obtain supplemental data from at least one of the following components:
- a global positioning system,
- a laser altimeter,
- a radar altimeter,
- a data base,
- an input device or input interface.

According to yet another embodiment, the flying path defines a path for a fly-by maneuver of the aircraft and the processing unit is further adapted to record the captured images and/or the navigational data while flying around the landing site to improve the determined 3D information of the landing site. The results may be further improved when the landing point is passed twice which increases the quality of the data, e.g. when using the flight pattern that shows both sides of potential objects or obstacles in the landing site, which simplifies the calculation of their 3D position.

The term "navigational data" shall refer to any data that allow to follow a path from a starting position to an end position and, in particular, includes information about straight flight portions and where which turns to which degree were (or have to be) made. The navigation data may thus be subsequent position data of the aircraft along the flying path. Thus, at specific time instances corresponding position data may be recorded, for example starting from the starting position. Consequently, the images of the landing site can be time aligned, for example for each time instance starting from the starting time and ending at the ending time, with the navigation data.

According to yet another embodiment, the at least one camera includes a front camera for capturing front images in flight direction and the processing unit is further configured to overlay the determined landing symbology with the front images or a corresponding video derived from the front images.

According to yet another embodiment, the at least one camera includes another side camera for capturing images from another side of the aircraft and the processing unit is further configured to determine and provide the landing symbology based on the images captured by the other side camera. Hence, the aircraft may have a front camera and two side cameras (on both sides of the aircraft). The additional side camera allows approaching the landing site from either side of the aircraft so that the system is operable independently of the concrete approach.

According to yet another embodiment, the processing unit is adapted to take as starting position a 3D point in the air indicating the starting point of the flying path.

The IMU may be adapted to measure at least one of the information at specific time instances. The time instances may follow a starting time corresponding to the starting position. The time instances may end at an ending time corresponding to a landing position on the landing site. Thus, in-between the starting time and the ending time, the IMU may be adapted to deliver corresponding data to the processing unit.

The IMU may be adapted to provide the data to the processing unit during the fly-by maneuver. The fly-by maneuver may be defined by flying from the starting position past the landing site. The processing unit may be adapted to compute during the fly-by maneuver the time synchronized navigation data by integrating the velocity and/or acceleration (information) from the starting position over time. The integration may be performed starting from the starting position. The integration may be performed for each of the time instances, for example between consecutive time instances.

Embodiments of the present invention relate also to an aircraft with:
- at least one camera adapted to capture a landing site;
- a system as defined before; and
- a display adapted to display the landing symbology determined by the system to the pilot.

The aircraft may be a small manned vehicle for air traffic. In particular, the aircraft may be a helicopter. The aircraft may be handled by the pilot of the aircraft. The pilot may be one of the aircraft personnel able to fly the aircraft.

Since real 3D information cannot be displayed on a 2D display, the display may show a 3D landing symbology generated from 3D information in combination with an optional live video or a rendered video using historic video data projected on the gathered 3D data surface.

According to yet another embodiment, the at least one camera include multiple cameras mounted at different positions of the aircraft having different viewing angles including at least one of the following:
- a side camera on a right-hand side,
- a front camera,
- a side camera on a left-hand side.

The camera(s) may be mounted at different positions of the aircraft to have different viewing angles.

Embodiments of the present invention relate also to a method for providing a landing aid to a pilot of an aircraft in a landing site, the aircraft comprises at least one camera for capturing images of the landing site from a side of the aircraft. The method includes:
- capturing, by the at least one camera, a series of images of the landing site along the flying path;
- determining three-dimensional, 3D, information of the landing site based on the series of images captured along the flying path;
- determining landing symbology based on the determined 3D-information; and
- providing the landing symbology for displaying to the pilot of the aircraft to aid the landing in the landing site.

According to yet another embodiment, the aircraft further includes an inertial measurement unit, IMU, adapted to provide data during flight indicative of movements of the aircraft and the method further comprises:
- recording navigation data along the flying path;
- determining the 3D information of the landing site using the images of the landing site in combination with the navigation data both time-synchronized along the flying path.

According to yet another embodiment, when a landing position is set inside the landing site, the method further comprises evaluating the flying path from the starting position to the landing position past the landing site onto the landing position.

According to yet another embodiment, the flying path is evaluated to incorporate a fly-by maneuver of the aircraft alongside the landing site, taking into account coordinates of the landing position inside the landing site, coordinates of the starting position and respective orientations of the at least one camera.

Embodiments of the present invention relate also to a computer program product is provided. The computer program product comprises program code portions for carrying out a method according to the third aspect, when the computer program product is executed on one or more processing units. Therefore, the method or at least part thereof may be computer-implemented.

Optionally, the computer program product is stored on one or more computer readable storage media.

It is clear to a person skilled in the art that the statements set forth herein under use of hardware circuits, software means or a combination thereof may be implemented. The software means can be related to programmed microprocessors or a general computer, an ASIC (Application Specific Integrated Circuit) and/or DSPs (Digital Signal Processors). For example, the landing aid system, the landing aid method, the at least one camera, the IMU and the processing unit may be implemented partially as a computer, a logical circuit, an FPGA (Field Programmable Gate Array), a processor (for example, a microprocessor, microcontroller (µC) or an array processor)/a core/a CPU (Central Processing Unit), an FPU (Floating Point Unit), NPU (Numeric Processing Unit), an ALU (Arithmetic Logical Unit), a Coprocessor (further microprocessor for supporting a main processor (CPU)), a GPGPU (General Purpose Computation on Graphics Processing Unit), a multi-core processor (for parallel computing, such as simultaneously performing arithmetic operations on multiple main processor(s) and/or graphical processor(s)) or a DSP.

It is further clear to the person skilled in the art that even if the herein-described details will be described in terms of a method, these details may also be implemented or realized in a suitable device, a computer processor or a memory connected to a processor, wherein the memory can be provided with one or more programs that perform the method, when executed by the processor. Therefore, methods like swapping and paging can be deployed.

Even if some of the aspects described above have been described in reference to a method, these aspects may also apply to the landing aid system. Likewise, the aspects described above in relation to the landing aid system may be applicable in a corresponding manner to the method.

It is also to be understood that the terms used herein are for purpose of describing individual embodiments and are not intended to be limiting. Unless otherwise defined, all technical and scientific terms used herein have the meaning which corresponds to the general understanding of the skilled person in the relevant technical field of the present disclosure; they are to be understood too neither too far nor too narrow. If technical terms are used incorrectly in the present disclosure, and thus do not reflect the technical concept of the present disclosure, these should be replaced by technical terms which convey a correct understanding to the skilled person in the relevant technical field of the present disclosure. The general terms used herein are to be construed based on the definition in the lexicon or the context. A too narrow interpretation should be avoided.

It is to be understood that terms such as e.g. "comprising" "including" or "having" etc. mean the presence of the described features, numbers, operations, acts, components, parts, or combinations thereof, and do not exclude the presence or possible addition of one or more further features, numbers, operations, acts, components, parts or their combinations.

Although terms like "first" or "second" etc. may be used to describe different components or features, these components or features are not to be limited to these terms. With the above terms, only one component is to be distinguished from the other. For example, a first component may be referred to as a second component without departing from the scope of the present disclosure; and a second component may also be referred to as a first component. The term "and/or" includes both combinations of the plurality of related features, as well as any feature of that plurality of the described plurality of features.

In the present case, if a component is "connected to" or "accesses" another component, this may mean that it is directly connected to or directly accesses the other component; however, it should be noted that another component may be there between. If, on the other hand, a component is "directly connected" to another component or "directly accesses" the other component, it is to be understood that no further components are present therebetween.

In the following, the preferred embodiments of the present disclosure will be described with reference to the accompanying drawings; the same or similar components are always provided with the same or similar reference symbols. In the description of the present disclosure, detailed explanations of known connected functions or constructions are omitted, insofar as they are unnecessarily distracting from the present disclosure. The accompanying drawings are illustrative of the present disclosure and are not to be construed as a limitation.

### Brief Description of the Drawings

Other objects, features, advantages and applications will become apparent from the following description of non-limiting embodiments regarding the accompanying drawings. In the drawings, all described and/or illustrated features, alone or in any combination form the subject matter disclosed therein, irrespective of their grouping in the claims or their relations/references. The dimensions and proportions of components or parts shown in the figures are not necessarily to scale; these dimensions and proportions may differ from illustrations in the figures and implemented embodiments.
- Fig. 1: schematically illustrates a block diagram of a landing aid system according to an embodiment of the inventions;
- Fig. 2a: schematically illustrates an aircraft with at least a part of the landing aid system in a first view;
- Fig. 2b: schematically illustrates an aircraft with at least a part of the landing aid system in a second view;
- Fig. 2c: schematically illustrates an aircraft with at least a part of the landing aid system in a third view;
- Fig. 3a: schematically illustrates a first alternative of a flying path for a fly-by maneuver of an aircraft;
- Fig. 3b: schematically illustrates a second alternative of a flying path for a fly-by maneuver of an aircraft;
- Fig. 4a: shows the different phases of the flight and the use of the different cameras at the different phases during the fly by maneuver;
- Fig. 4b: shows for comparison the content of the images when using a stereoscopic camera; and
- Fig. 5: schematically illustrates a method for providing a landing aid.

### Detailed Description

The landing aid system, the method for providing landing aid and the aircraft comprising at least parts of the landing aid system will now be described with respect to the embodiments.

In the following, without being restricted thereto, specific details are set forth to provide a thorough understanding of the present disclosure. However, it is clear to the skilled person that the present disclosure may be used in other embodiments, which may differ from the details set out below.

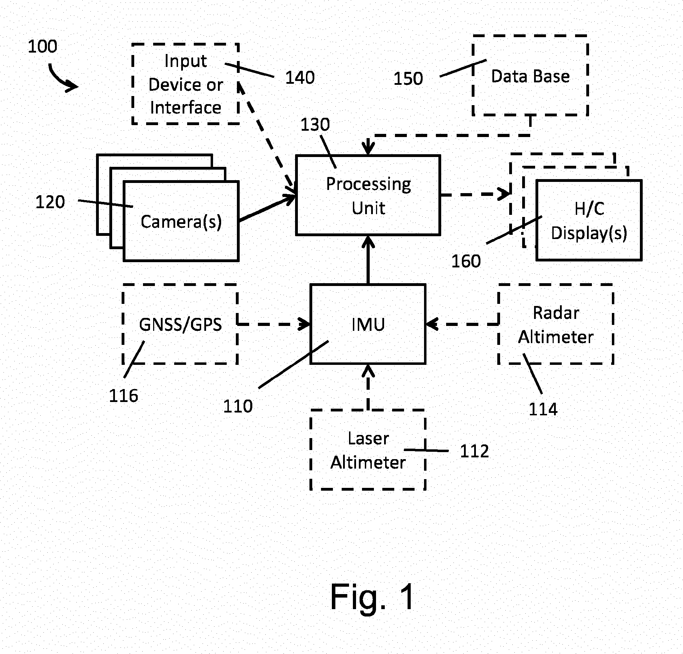

**Fig. 1** schematically illustrates a block diagram of a landing aid system 100. The landing aid system 100 comprises a processing unit 130, for example a computer. The processing unit 130 acquires the delivered information of the IMU 110 and the camera(s) 120, processes the data and generates information for helicopter display(s) 160 such as a head-up-display (HUD), helmet-mounted-display (HMD) and/or head-down-display (HDD), which may also be part of the landing aid system 100. The HUD, HMD and/or HDD may be adapted to display the processed information to the pilot or crew. The landing aid system 100 may rely on precise navigation data from the IMU 110 which may be backed by other systems, for example a Global Navigation Satellite System (GNSS) 116 and/or Radar/Laser altimeter 112, 114.

The data base 150 may contain detailed geo/terrain information to be used as additional source. Further, an input device 140 may be available for command and control purposes. The data base 150 may be adapted to provide route information to the processing unit 130. The route information may be the basis for the flying path to be evaluated by the processing unit 130. The route information may comprise terrain data stored in the data base 150 and optionally a predefined landing point inside the landing site. The terrain data from the data base 150 can be used together with signals from the IMU 110 to display the so calculated information on a HUD, HDD and/or a HMD as 3D conformal symbology (3DCS) or as Synthetic Vision Systems (SVS) visualization.

The data provided by the IMU 110 to the processing unit 130 may comprise geometric motion information, like 3D velocity information, attitude information or position information of the aircraft. The landing aid system 100 may comprise a GNSS receiver 116 for receiving GNSS signals to compute the starting position of the aircraft. Alternatively, the IMU 110 may comprise a GNSS interface 116 for receiving GNSS signals to increase accuracy in computing geometric motion information of the aircraft. The GNSS interface 116 may be a GNSS receiver.

The display unit 160 may be adapted to display real-time updated information of the landing site based on the calculated 3D information of the landing site.

The embodiment shown in Fig. 1 may comprise one or more optional additional features corresponding to one or more aspects mentioned in connection with the proposed concept or one or more embodiments described below.

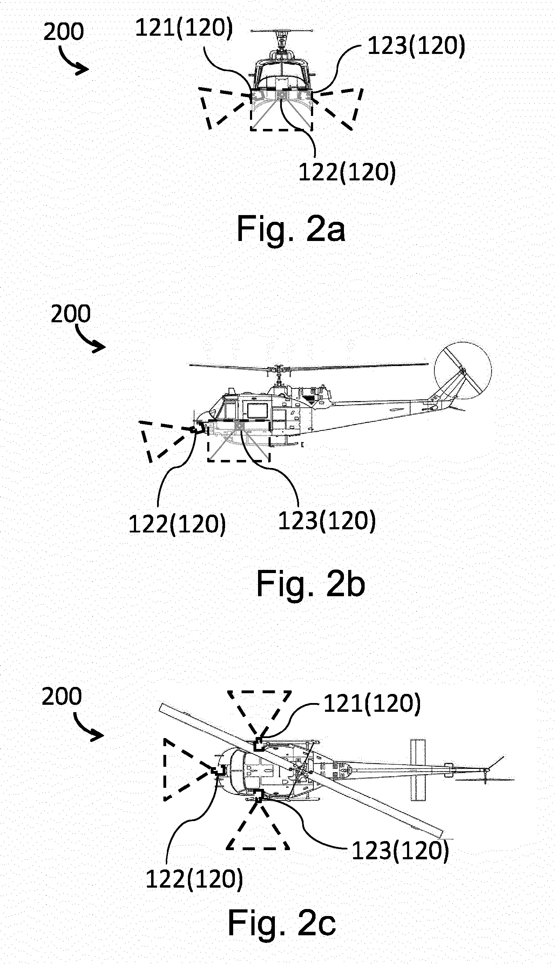

**Fig. 2a** depicts a front view of the aircraft 200 with at least a part of the landing aid system 100 described before. The exemplary aircraft 200 is a helicopter (but may be any other small manned vehicle for air traffic) and comprises three cameras 120: a side camera 121 on the right-hand side, a front camera 122 and a side camera 123 on the left-hand side (when viewed in the normal flying direction). At least one of the cameras 121, 123 should be present to capture (e.g. continuously) images from the landing site. However, to provide a high flexibility, all three cameras 120 can be mounted on the aircraft 200. The front camera 122 is able to capture images of the terrain in front of the aircraft. The side camera 123 on left-hand side is able to capture images of the terrain on the left-hand side of the aircraft 200. The side camera 121 on right-hand side is able to capture images of the terrain on the right-hand side of the aircraft 200.

**Fig. 2b** schematically illustrates the left-hand side of the aircraft 200 showing the front camera 122 and the side camera 123 on the left-hand side. **Fig. 2c** shows a top view on the aircraft 200, again showing all three cameras 121, 122, 123 viewing in different directions from the aircraft 200.

Hence, Figs. 2a, 2b and 2c illustrate an exemplary camera layout, where one camera is looking forward or forward and slightly downward and two cameras are oriented sideways, for example oriented to both wings, sideward and/or 30° to 60° downward (with respect to a horizontal). The landing aid system 100 may differ from this arrangement. As long as at least one camera 120 is able to sequentially capture images from the landing site, the position and number of cameras are arbitrary.

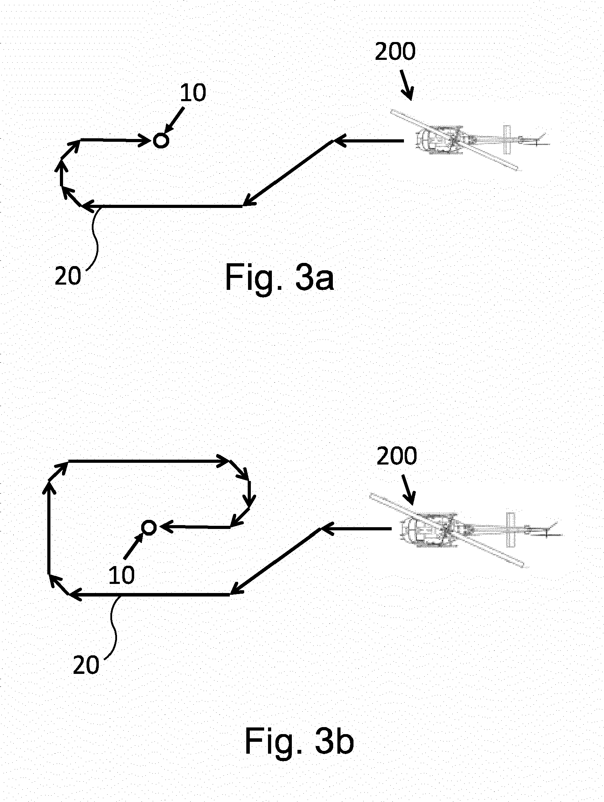

**Fig. 3a** schematically illustrates a first possible flying path 20 for a fly-by maneuver of an aircraft 200, where the aircraft 200 first passes the landing site 10 and finally approaches the landing site 10 from a back side (when viewed from the starting position).

**Fig. 3b** schematically illustrates a second possible flying path 20 for a fly-by maneuver of an aircraft 200, where the aircraft 200 first flies around the landing site 10 before landing from the same direction as the original approach (from the right-hand side in Fig. 3b). Hence, in this fly-by maneuver the landing site 10 can be captured by the camera(s) 120 from both sides which may further improve the 3D information that can be derived by sequentially/continuously capturing images from the landing site 10.

In addition, the flying path 20 may be evaluated to incorporate the fly-by maneuver of the aircraft 200 alongside the landing site 10, taking into account coordinates of the landing position inside the landing site 10, coordinates of the starting position and respective orientations of the at least one camera 120. The respective orientations of the at least one camera 120 may be defined by sets of attitude angles and positions on the aircraft 200, for example slanted down (with respect to a horizontal plane).

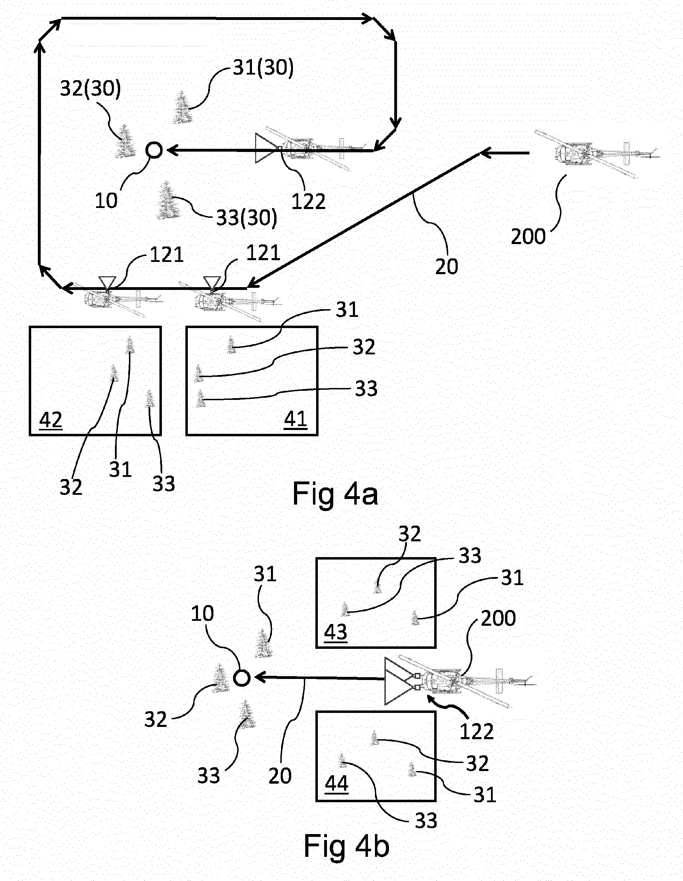

**Fig. 4a** shows the different phases of utilizing the different cameras 120 at the different phases during the fly-by maneuver of the aircraft 200. When the aircraft 200 passes the landing site 10 images may be captured continuously from the landing site 10 using the side camera 121 on the right-hand side of the aircraft 200. Exemplarily two images 41 and 42 are shown. Due to the motion of the aircraft 200 the landing site 10 with surrounding trees 30 are visible under different viewing angles. This can be seen by comparing the positions of the depicted exemplary trees 31, 32, 33 in the first image 41 and the second image 42. This information together with the knowledge of the position and the orientation can be used to determine the relative positions and/or sizes of the exemplary trees 30. Hence, based on the 2D images 3D information about the landing site 10 can be determined. From this 3D information a landing symbology 31, 32, 33 (for the trees 30, for example) can be determined.

This technique known as structure from motion (SfM) can be used, wherein a photogrammetric range imaging technique for estimating three-dimensional structures from two-dimensional image sequences is derived. An optional coupling with local motion signals (e.g. from the IMU 110 or the GPS/GNSS unit 116) may be provided. The SfM technique may thus be used to estimate a depth of a scene, i.e. 3D coordinates, from 2D images sensed over time.

When finally approaching the landing site 10, the front camera 122 may be utilized to capture live picture(s) or a live video of the scenery in front of the aircraft 200. These live pictures or live video can be overlaid with the determined landing symbology and obstacle symbology (e.g. of the trees 30) generated based on the derived 3D information which helps to pilot in assessing correctly the concrete situation at the landing site 10 - even if the visibility is bad.

The employed landing symbology may be the 3DCS provided by only merging 2D camera information, with attitude and speed information.

It is understood that the trees 30 (e.g. a first tree 31, a second tree 32 and a third tree 33) are only example of possible objects or obstacles that should be considered during landing the aircraft 200 (e.g. for a degraded visual environment). Moreover, also the images are recorded continuously and time of capturing can be different. It is of advantage to capture more than two images. In addition, a better 3D resolution can be achieved if the positions of capturing the images 41, 42 are sufficiently different (depending on the distance to the landing site 10). Finally, the pilot may approach the landing site 10 sufficiently to be able to capture images from the scenery.

Thus, during the fly-by maneuver the information of the side camera(s) and the IMU can be used to calculate the 3D information of the landing site 10. The front camera 122 may not be used in this phase. The front camera 122 is used for the landing approach where it can provide the background for the overlay of landing symbology 30. In case of degradation of visibility, the previously recorded video data of the front camera is used to render virtual view instead of live video.

**Fig. 4b** depicts - for comparison - the content of the images when using a stereoscopic camera 122 at the front side of the aircraft 200. Although it is possible to derive 3D information from a stereoscopic camera, the resolution is much lower as in the fly-by maneuver as described with Fig. 4a. In addition, for a low visibility the stereoscopic camera 122 may produce reliable results only very late.

Furthermore, the images of the front camera 122 may be displayed on HDD, HUD and/or an HMD. Each camera 120 may be respectively fixed mounted with a fixed field of view or gimbaled allowing for steering the line of sight for example with the HUD line of sight.

According to further embodiments, multiple imaging wavelengths for the image acquisition (multi-band systems) may be utilized. They may be referred to as Enhanced Vision Systems (EVS). The at least one camera 120, especially when using multi-band systems, may thus improve the pilots' view in some forms of visual degradation.

The captured images may also be recorded along with corresponding time information during the fly-by maneuver of the aircraft 200 along the flying path 20. For example, the navigation data (e.g. from the IMU 110) is recorded along with corresponding time information during the fly-by maneuver of the aircraft 200 along the flying path 20. These steps may be performed by the processing unit 130 (see Fig. 1).

For example, the GNSS 116 receives time signals from the corresponding GNSS satellites and provides them to the IMU 110. The Laser altimeter 112 and the Radar Altimeter 114 may provide height information to the IMU 110. In combination with the internal sensors and external sensors the processing unit 130 calculates information on a movement of the aircraft 200, such as position, velocity, attitude and/or acceleration. For example, the data to be provided continuously to the processing unit 130 by the IMU 110 may be computed based on sensor signals measuring information on a movement of the aircraft 200, such as position, velocity, attitude and/or acceleration.

For example, during the fly-by maneuver the time synchronized navigation data may be computed by integrating the turn rates and/or accelerations (e.g. information from the IMU 110) from the starting position over time. The integration may be performed starting from the starting position and for each of the time instances, for example between consecutive time instances.

For example, the navigation data may be position data of the aircraft 200 along the flying path 20. Thus, at specific time instances corresponding position velocity, attitude and/or acceleration data may be recorded, for example starting from the starting position. Consequently, the images of the landing site 10 can be time aligned, for example for each time instance starting from the starting time and ending at the ending time, with the navigation data.

For example, the landing site 10 may comprise a landing point, which coordinates are known (preset). For example, the landing site 10 may be provided from an assistance server or alternative source.

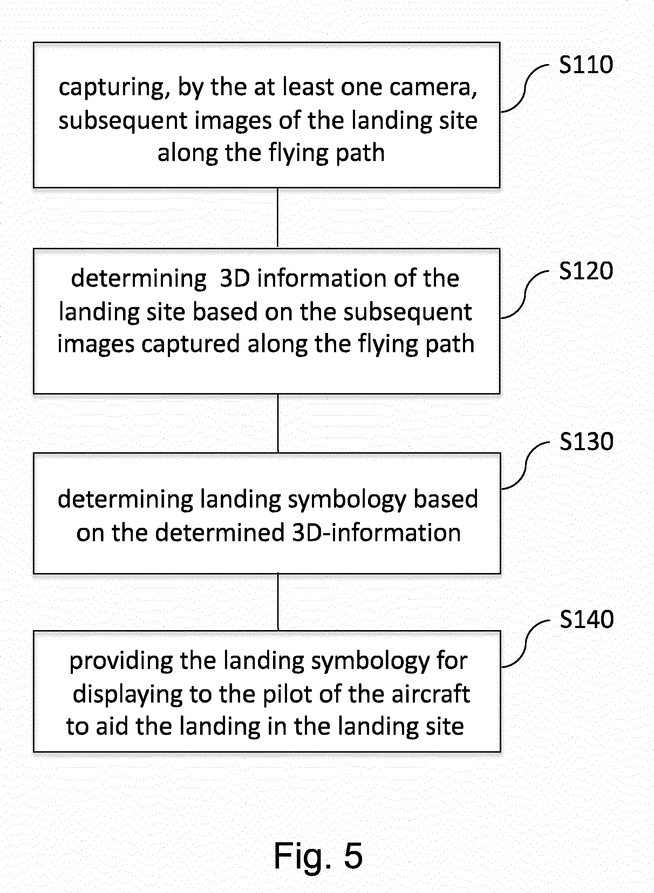

**Fig. 5** schematically illustrates a method for providing a landing aid for a pilot of an aircraft 200 in a landing site 10. The aircraft 200 comprises the camera(s) 120 mounted at different positions with different orientations and an inertial measurement unit, IMU, 110. The method comprises:
- capturing S110, by the at least one camera 120, a series of images 41, 42 of the landing site 10 along the flying path 20;
- determining S120 three-dimensional, 3D, information of the landing site 10 based on the series of images 41, 42 captured along the flying path 20;
- determining S130 landing symbology 31, 32, ... based on the determined 3D-information;
- providing S140 the landing symbology 31, 32, ... for displaying to the pilot of the aircraft 200 to aid the landing in the landing site 10.

The step of determining the 3D information of the landing site 10 may be based on images captured during a fly-by maneuver and may be time synchronized navigation data of the aircraft 200. The navigation data may be computed by performing integration of the measured sensor signals (acceleration, speed etc.) over time starting from the starting position.

The method may further comprise setting a landing position inside the landing site to be landed on by the aircraft 200 and a step of evaluating the flying path 20 from the starting position to the landing position past the landing site onto the landing position.

According to further embodiments, the method may include further optional steps. For example, the starting point of the method may be a previously set landing point which is selected by some other method and stored on the computer as illustrated as processing unit 130 in the system block diagram according to Fig. 1. Assuming that the visual degradation occurs only in the final landing phase typical for brownout and whiteout situations, i.e. a sufficient view on the landing site is given during approach and during the flight maneuver further described below.

These method steps can be divided into several consecutive steps:
1. Calculating evaluation path of traffic circling to examine landing site: The evaluation path is calculated in such a way that the landing site is recorded by the camera(s) from different angles. The orientation of the camera(s) is taken into account as well as the coordinates of the landing point and the helicopter. In case of two side cameras 121, 123 the system can provide two evaluation paths where each path is optimized for each side camera. The pilot can then be guided along such a path. A fly-by of the landing site for data acquisition is taken into account for the evaluation path.
2. Directing the pilot to fly according to the calculated evaluation path: Non-straight flight paths may for example be visualized by tunnel in the sky techniques. Thus, the pilot may be guided along one of the non-straight evaluated flight paths.
3. Recording time-synchronized navigation data and camera images 120: The navigation data provided by the IMU 110 may be combined with the image data in a time synchronized manner.
4. Calculating 3D information of the landing site around landing point according to 2D camera information and helicopter movement: In this step up-to-date 3D information is calculated by correlating camera images taken from different helicopter positions and extracting range information of various objects with a method like structure from motion technique. Thus, a 3D map (3D data) is generated around the landing point. This map may be provided through the H/C displays to the helicopter.
5. Evaluating quality of 3D data for landing: The quality of the acquired data may depend on the traffic circle maneuver and the topographic features of the landing site. In this step the quality is evaluated to enable a safe landing.
6. If quality is sufficient, proceeding, if not go back to step 2: According to the outcome of step 5 the crew may be advised to repeat the circling maneuver or to proceed the landing. This step may ensure airworthiness of the corresponding landing maneuver.
7. Displaying landing symbology as overlay over a live video: In addition to a live video, landing symbology 30 based on the generated 3D data can be visualized and enabling the pilot to land safely.
8. In case of degradation of visibility using previously recorded video data to render virtual view instead of live video.

A control routine may be implemented to detect if and when the visibility is degraded. From that on, only the historic (recorded) video data is used to render a photorealistic view by a method like texture mapping. This method projects a previously recorded and not degraded 2D view onto the generated 3D surface. This mapped texture, i.e. the 2D image, is then presented in correct position, i.e. with the eye point at this time.

Advantageous aspects of embodiments can be summarized as follows:
According to one or more embodiment, a system 100 that generates a 3D conformal symbology (3DCS) for a helicopter crew in a brownout or whiteout situation based on 2D camera images recorded in the landing approach may be provided. The system 100 may be referred to as landing support system.

According to one or more embodiments, a method for a landing approach may be provided that allows to reliably calculate 3D information from 2D sensors.

The method and the system may provide a full 3D enhanced synthetic vision of the landing site displayed in a helmet mounted display (HMD) and/or head down display (HDD) using only 2D cameras (visible or infrared) instead of 3D sensors.

According to one or more embodiments, a pure landing aid system without obstacle warning function may be provided.

The terms "aid" and "support" may be used interchangeably herein. The "landing point" is really a point, i.e. one set of coordinates. The "landing zone" may be the direct vicinity of the helicopter that is occupied by the H/C after landing, e.g. 2 rotor diameters. The "landing site" is a broader area around the landing zone including the area for approach and touch and go.

The landing support system may be a tradeoff/compromise in a field of competing and partly conflicting requirements. For example, provision of enhanced synthetic vision relying on 3D sensors such as Radar or Lidar may be both heavy and expensive as well as bulky.

Accurate 3D information may be required for providing enough cueing in the form of 3D conformal symbology. The at least one camera can be used to provide 3D data by a method like structure from motion. This method may fail if the motion is directed to the point of interest. This can be avoided by the fly-by maneuver of the aircraft 200.

According to one or more aspects, 3D data may be gathered whereas no 3D sensor may be required. This may allow for SVS display using only small, light and low-cost components.

According to one or more aspects, real world inaccuracies (for example GPS positioning errors and database inaccuracies) in all dimensions may be avoided and may minimize a risk of misleading information.

According to one or more aspects, image flatness and a lack of the capability to efficiently remember and display previously recorded imagery in an eye point corrected way may be avoided.

According to one or more aspect, the pilot may be supported in the landing phase by providing a realistic outside view even when the outside visibility is close to zero by employing previously captured images.

According to one or more aspects, 3D sensors may be omitted, which may reduce a SWAP-C (Size, Weight, Power and Cost) burden, which keeps them from being applied in the helicopter market.

According to one or more aspects, only 2D sensors may be used but still full 3DCS may be provided.

According to one or more aspects, the landing aid system may be suitable for helicopters. The landing aid system may provide SVS display under use of one or more sensors, one or more displays, an IMU, a computer and possibly other appropriate means. The landing aid system may be able to calculate up-to-date 3D information of the landing site and providing the information to a pilot. Specifically, the sensors used herein may be limited to 1D and 2D sensors and in that the 3D information is gathered and calculated during a fly-by of the landing site.

According to one or more embodiments, 3D conformal landing symbology may be calculated and part of the displayed information. Further, a live video may be part of the displayed information. Furthermore, a rendered video using historic video data projected on the gathered 3D data surface may be part of the displayed information.

According to one or more aspects, an approach procedure may be provided for a safe helicopter landing. The approach procedure may comprise providing a given landing point and maneuvering instructions. In particular, in a first step, the instructions may be optimized for calculating 3D information from 2D sensors (by structure from motion techniques). In particular, in a second step, instructions may be provided to safely approach the landing point.

According to one or more embodiments, the instructions of the first step may be given to the pilot by a predefined procedure. The instructions of the first step may be given visually to the pilot on the fly. Further, the instructions of the first step may be given to the pilot by a "tunnel in the sky" display. Also, the instructions of the second step may include 3D conformal landing symbology visualization. Furthermore, the instructions of the second step may include a video overlay. Moreover, the instructions of the second step may include a rendered video using historic video data projected on the gathered 3D data surface.

The fly-by maneuver may be performed before landing the aircraft 200 in the landing site. Further, the flying path 20 may be alongside the landing site.

The side camera(s) 121, 123 are adapted to provide information of the landing sited during the fly-by maneuver.

The processing unit may be adapted to record the captured images along with corresponding first time information (e.g. first timestamps) during the fly-by maneuver of the aircraft 200 along the flying path 20.

The processing unit may be adapted to record the navigation data along with corresponding second time information (e.g. second timestamps) during the fly-by maneuver of the aircraft 200 along the flying path 20.

The processing unit may be adapted to time-synchronize the captured images and the navigation data along the flying path 20 by aligning the first time information with the second time information.

The data may comprise currently measured movement of the aircraft 200 during the fly-by maneuver of the aircraft 200 along the flying path 20.

The starting position may be a point (including for example the height) in the air indicating the starting point of the flying path 20.

The starting position may be any position in a vicinity or an environment of the landing site 10. A front camera 122 may be mounted on a front of the aircraft 200. One or more side cameras 121, 123 may be mounted on the side of the helicopter 200. Each of the at least one camera may be mounted at the helicopter with a slant angle with respect to the horizontal, in particular downwards or diagonally down. The at least one camera may be for example a first camera as side (diagonally downwards looking) camera and a second camera as a front camera . Further, the at least one camera 120 may comprise a third camera as another side (diagonally downwards looking) camera. Consequently, one view of an area in front and below the aircraft 200, and at least one view of an area sideways and below the aircraft 200 can be captured by the at least one camera. The images of the landing site may consequently be captured by the at least one camera along the flying path 20 from different angles during the fly-by maneuver.

Each of the at least one camera 120 may be two-dimensional, 2D, cameras. Consequently, costs can be reduced overall.

The aspects and features mentioned and described together with one or more of the previously detailed examples and figures, may as well be combined with one or more of the other examples in order to replace a like feature of the other example or in order to additionally introduce the feature to the other example.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. A landing aid system (100) for a pilot of an aircraft (200) to land in a landing site (10), the aircraft including at least one camera (120) for capturing images of the landing site (10) along a flying path (20) from a side of the aircraft (200) and an inertial measurement unit, IMU, (110) adapted to provide data during flight indicative of movements of the aircraft (200) the system (100) comprising:
a processing unit (130) adapted:
- to determine three-dimensional, 3D, information of the landing site (10) based on a series of images (41, 42) captured along the flying path (20) in combination with the data of the IMU (110) both time-synchronized along the flying path (20), and based thereon
- to determine and provide landing symbology (31, 32, ...) for displaying to the pilot of the aircraft (200) to aid the landing.

2. The system (100) according to claim 1, wherein the at least one camera (120) and/or the IMU (110) is part of the system (100),
wherein the processing unit (130) is further adapted:
- to record navigation data along the flying path (20) based on the data of the IMU (110).

3. The system (100) according to claim 2, wherein the processing unit (130) and/or the IMU are configured to obtain supplemental data from at least one of the following components:
- a global positioning system (116),
- a laser altimeter (112),
- a radar altimeter (114),
- a data base (150),
- an input device and/or input interface (140).

4. The system (100) according to one of the preceding claims, wherein the flying path (20) defines a path for a fly-by maneuver of the aircraft (200),
the processing unit (130) being further adapted to record the captured images and/or the navigational data while flying around the landing site (10) to improve the determined 3D information of the landing site (10).

5. The system (100) according to one of the preceding claims, wherein the at least one camera (120) includes a front camera (122) for capturing front images in flight direction,
the processing unit (130) being further configured to overlay the determined landing symbology (31, 32, ...) with the front images or a corresponding video derived from the front images.

6. The system (100) according to one of the preceding claims, wherein the at least one camera (120) include another side camera (123) for capturing images from another side of the aircraft (200),
the processing unit (130) being further configured to determine and provide the landing symbology (31, 32, ...) based on the images captured by the other side camera (123).

7. The system (100) according to any one of the preceding claims, wherein the processing unit (130) is adapted to take as starting position a 3D point in the air indicating the starting point of the flying path (20).

8. An aircraft (200) comprising:
at least one camera (120) adapted to capture images of a landing site (10);
a system (100) according to any one of the preceding claims; and
a display (160) adapted to display the landing symbology (31, 32, ...) determined by the system (100) to the pilot.

9. The aircraft (200) according to claim 8, wherein the at least one camera (120) includes multiple cameras mounted at different positions of the aircraft (200) having different viewing angles including at least one of the following:
- a side camera (121) on a right-hand side,
- a front camera (122),
- a side camera (123) on a left-hand side.

10. A method for providing a landing aid to a pilot of an aircraft (200) in a landing site (10), the aircraft (200) comprising at least one camera (120) for capturing images of the landing site (10) from a side of the aircraft (200), the method comprising:
capturing (S110), by the at least one camera (120), a series of images (41, 42) of the landing site (10) along the flying path (20);
determining (S120) three-dimensional, 3D, information of the landing site (10) based on the series of images (41, 42) captured along the flying path (20);
determining (S130) landing symbology (31, 32, ...) based on the determined 3D-information;
providing (S140) the landing symbology (31, 32, ...) for displaying to the pilot of the aircraft (200) to aid the landing in the landing site (10).

11. The method according to claim 10, the aircraft (200) further including an inertial measurement unit, IMU, (110) adapted to provide data during flight indicative of movements of the aircraft (200), the method further comprising:
recording navigation data along the flying starting;
determining the 3D information of the landing site (10) using the images of the landing site (10) and the navigation data both time-synchronized along the flying path (20).

12. The method according to claim 10 or claim 11, further comprising setting a landing position inside the landing site (10) to be landed on by the aircraft (200), the method further comprising:
evaluating the flying path (20) from the starting position to the landing position past the landing site (10) onto the landing position.

13. The method according to claim 12, wherein the flying path (20) is evaluated to incorporate a fly-by maneuver of the aircraft (200) alongside the landing site (10), taking into account coordinates of the landing position inside the landing site (10), coordinates of the starting position and respective orientations of the at least one camera (120).

14. A computer program product comprising program code portions for carrying out a method according to claim any one of claims 10 to 13 when the computer program product is executed on one or more processing units.

15. The computer program product of claim 14, which is stored on one or more computer readable storage media.
